# EUROPEAN PATENT SPECIFICATION

(11) **EP 3 109 642 B1**
(45) Date of publication and mention of the grant of the patent: **10.04.2024**
(21) Application number: 15173748.3
(22) Date of filing: 25.06.2015
(51) Int. Cl.: G01N 35/04, B01L 9/00, G01N 35/10, G01N 35/00, G01N 35/02

(54) **DEVICE AND METHOD FOR HANDLING RACKS OF DISPOSABLE PIPETTE TIPS IN A LABORATORY AUTOMATION SYSTEM AND LABORATORY AUTOMATION SYSTEM**
VORRICHTUNG UND VERFAHREN ZUR HANDHABUNG VON EINWEGPIPETTENSPITZENGESTELLEN IN EINEM LABORAUTOMATISIERUNGSSYSTEM UND LABORAUTOMATISIERUNGSSYSTEM
DISPOSITIF ET PROCEDE PERMETTANT DE MANIPULER DES RATELIERS DE POINTES DE PIPETTE JETABLES DANS UN SYSTEME D'AUTOMATISATION DE LABORATOIRE ET SYSTEME D'AUTOMATISATION DE LABORATOIRE

(43) Date of publication of application: 28.12.2016
(73) Proprietor: Roche Diagnostics GmbH, 68305 Mannheim (DE); F. Hoffmann-La Roche AG, 4070 Basel (CH)
(72) Inventor: Berberich, Walter, 73230 Kirchheim/Teck (DE); Baumgart, Julian, 71522 Backnang (DE); Daisley, Richard-Paul, 70372 Stuttgart (DE); Strzempek, Dominik, 71394 Kernen (DE); Söntges, Stefan, 70180 Stuttgart (DE)
(74) Representative: Patentanwälte Ruff, Wilhelm, Beier, Dauster & Partner mbB

(56) References cited:
- EP-A1- 0 753 749
- EP-A1- 1 275 966
- EP-A1- 2 620 776
- EP-A2- 2 803 412

## Description

### BACKGROUND OF THE INVENTION

The invention relates to a device and method for handling racks of disposable pipette tips in a laboratory automation system. The invention further relates to a laboratory automation system comprising such a device and/or adapted for carrying out such a method.

A laboratory automation system comprises at least one pre-analytical, analytical and/or post-analytical station, in which samples, for example blood, saliva, swab and other specimens taken from the human body or plant materials, are processed. It is well known to provide pipetting systems using disposable pipette tips, which are attached to a main body of a pipetting device and replaced after each use or when required. Typically, racks are provided, which are configured to store a predetermined number of pipette tips of a certain size and with a defined spacing. The racks are also referred to as trays or magazines. The racks are presented to a gripper or any other delivery system for delivering the tips to the pipetting system.

EP 1 275 966 A1 discloses a part feeding device comprising a lift that raises a plurality of racks holding unused disposable parts to a rack separation station, while keeping the racks stacked together; a rack separator that hinders the uppermost one of said stacked racks from being lowered when said lift lowers, while allowing the other racks to lower, so that said uppermost rack is separated from said other racks so as to remain in said rack separation station; and a rack recovering part that operates after the parts on the separated part rack have been consumed, to move this used part rack downward for recovery.

It is known to provide a laboratory automation system using disposable pipette tips with drawers, wherein a number of racks is loaded into or on an extracted drawer and the drawer is moved into a use position for allowing a pipetting system to use the disposable pipette tips. For using the disposable pipette tips, for example a gripper is driven to move to the individual positions of the disposable tips held by each rack and to pick up the pipette tips one after the other. After all pipette tips are used, the drawer is ejected and the empty racks are manually removed and replaced.

EP 2 803 412 A2 discloses a device for supplying in a continuous manner racks of disposable pipette tips to a pipetting system, which device comprises guide rails for guiding successively a plurality of racks from a loading region to a supply region, wherein the loading region is accessible by a user or loading means for loading the plurality of racks on the guide rails, and at the supply region the disposable pipette tips held in a supplying one of the plurality of racks are accessible by a means for delivering at least one selected one of the plurality of disposable pipette tips to the pipetting system. After the supplying one of the plurality of racks is empty, the device is driven to move a successive rack into the supply region and to move the empty rack off the device approximately in a direction in extension of the guide rails.

### SUMMARY OF THE INVENTION

It is the object of the present invention to provide an improved device and an improved method for handling racks of disposable pipette tips in a laboratory automation system. It is a further object of the invention to provide a laboratory automation system comprising such a device and/or adapted for carrying out such a method.

According to a first aspect, a device for handling racks of disposable pipette tips in a laboratory automation system with the features of claim 1 is provided, which device comprises a loading region, a supply region, and at least one guide rail for guiding racks from the loading region along a movement direction lying in a horizontal plane to the supply region, wherein the at least one guide rail is adapted to receive a plurality of racks, wherein the loading region is accessible by a user or a loading means for loading at least one rack on the at least one guide rail, wherein a plurality of disposable pipette tips stored in a supplying rack located in the supply region is accessible by a delivering device for delivering at least one selected one of the plurality of disposable pipette tips to a pipetting system, and wherein the device comprises at least one moveableblock, which is controllably moveable by means of a driving device for selectively enabling or disabling a removal of the supplying rack from the supply region, wherein in the support position the at least one moveable block extends the at least one guide rail in the longitudinal direction of the guide rail, at the supply region the supplying rack is placed on the at least one moveable block arranged in the support position, and the at least one moveable block is moved into the release position for a removal of the supplying rack from the supply region in a downward direction.

A driving device is assigned to the moveable block, wherein the moveable block is driven to move in at least one direction by means of the driving device. In one embodiment, a return motion is also effected by the driving device. In other embodiments, the return motion is effected by a passive element, such as a return spring. The controllably moveable block can be brought into a first position, in which the supplying rack is supported in the supply region during a delivery of the tips, wherein a removal from the supply region is disabled during the delivery. After the rack is empty and before placing a new rack in the supply region, the moveable block is moved to a second position to release the supplying rack in a reliable and repeatable manner.

In preferred embodiments, the driving device is adapted to effect a to-and-fro movement of the at least one moveable block. The to-and-fro movement allows for a removal of the supplying rack even in case the supplying rack sticks to walls at the supply region, for example to a wall of the moveable block. In preferred embodiments, the driving device comprises a solenoid allowing to effect a fast to-and-fro movement of the moveable block. In preferred embodiments, activating of the driving device is controlled or triggered by a control device. The control device in preferred embodiments is integrated and/or in communication with a central control device of the laboratory automation system, which central control device has information about an emptying state of the supplying rack.

The rack is moved in a movement direction along the at least one guide rail into the supply region.

The device is arranged for a removal of the supplying rack from the supply region in a direction transverse to the movement direction of the rack along the at least one guide rail. In other words, a movement direction for moving a rack into the supply region differs from the movement direction for moving a rack out of the supply region. In such an embodiment, a plurality of racks can be successively moved into the supply region, wherein removing a supplying rack in a direction transverse to the movement direction is carried out prior to moving a successive rack into the supply region. The movement direction along the at least one guide rail lies in a horizontal plane (within working tolerances) in order to avoid an influence of gravitational forces when moving the racks in the movement direction. The supplying rack is removed in a downward direction. Hence, for a removal of the supplying rack advantage is taken of gravitational forces.

In the support position the moveable block extends the at least one guide rail in the longitudinal direction of the guide rail. Thereby, a smooth transition of the supplying rack from the guide rail to the moveable block is ensured. Preferably, the moveable block is provided with a side surface acting against the supplying rack when the at least one moveable block is in the support position. The side surface allows a clamping of the supplying rack in the supply region.

The empty racks are collected in a container. In preferred embodiments, a chute is provided underneath the supply region, wherein the device is arranged for a removal of the supplying rack via the chute.

At the supply region at least one abutment surface is provided perpendicular to the movement direction of the rack along the at least one guide rail. By means of the abutment surface, the supplying rack is positioned at the supply region in a repeatable manner and with high accuracy. This allows for a reliable pick-up or gripping of the disposable pipette tips by means of a delivering device.

A pusher is provided, wherein the supplying rack is forced against the abutment surface by means of the pusher. Preferably the pusher is adapted to be driven to and fro, wherein the pusher is moved away from the supplying rack in order to release the supplying rack and remove the supplying rack from the supply region.

In one embodiment, the pusher is distinct from a means for moving the racks along the guide rails. In preferred embodiments, the pusher is moveable between a home position and a working position for moving the rack from the loading region to the supply region. In other words, the pusher has two functions and can be driven to move a rack from a loading region to a supply region or to secure a supplying rack in the supply region by forcing the supplying rack against the abutment surface.

The at least one guide rail is adapted to receive a plurality of racks, wherein a rack moving mechanism is provided for moving the racks one by one towards and/or into the supply region. The pusher for securing the supplying rack at the supply region in preferred embodiments is integrated in the rack moving mechanism.

The device is a drawer unit comprising a drawer module, which drawer module is moveable between a use position and an eject position. In the eject position, an access to the loading position is facilitated, while allowing the device to be isolated from an environment when arranged in a use position.

At least one sensor is provided for detecting a removal of the supplying rack from the supply region, a presence of the supplying rack in the supply region, a state of the rack moving mechanism, a state or position of the drawer module and/or a state of an openable window provided at a cover of the device. The at least one sensor communicates with a control device assigned to the device and/or a central control device of the laboratory automation system.

According to a second aspect, a method for handling racks of disposable pipette tips in a device for a laboratory automation system with the features of claim 7 is provided, the device comprising a loading region, a supply region, at least one guide rail for guiding racks from the loading region along a movement direction lying in a horizontal plane to the supply region, which at least one guide rail is adapted to receive a plurality of racks, and at least one moveable block, which moveable block is controllably moveable by means of a driving device between a support position and a release position for selectively enabling or disabling a removal of the supplying rack from the supply region, wherein in the support position the at least one moveable block extends the at least one guide rail in the longitudinal direction of the guide rail, and the method comprising the steps of: (a) placing a rack at the loading region on the at least one guide rail, (b) moving the rack along the at least one guide rail into the supply region, wherein at the supply region the supplying rack is placed on the at least one moveable block arranged in the support position, and wherein a plurality of disposable pipette tips stored in the rack located in the supply region is accessible by a delivering device for delivering at least one selected one of the plurality of disposable pipette tips to a pipetting system, (c) securely positioning and holding the rack in the supply region, while delivering at least one selected one of the plurality of disposable pipette tips to a pipetting system, and (d) activating a driving device assigned to the at least one moveable block for moving the at least one moveable block into the release position for releasing the rack and for a removal of the rack from the supply region in a downward direction.

At the supply region the rack is forced against at least one abutment surface, which abutment surface is arranged perpendicular to the movement direction of the rack along the at least one guide rail, wherein the rack is forced against the abutment surface by means of the pusher. A wall comprising the abutment surface in one embodiment is moved to a release position for releasing the rack. In preferred embodiments, the abutment surface is arranged at a wall which is fixed in position with respect to the guide rails.

According to a third aspect, a laboratory automation system with at least one of pre-analytical, analytical and/or post-analytical station with a pipetting system is provided.

### BRIEF DESCRIPTION OF THE DRAWINGS

Further characteristics and advantages of the invention will emerge from the following description of an embodiment schematically illustrated in the drawings. Throughout the drawings, the same elements will be indicated by the same reference numerals. In the drawings:
- Fig. 1: is a perspective view of the device of Fig. 1.
- Fig. 2: is a perspective view of the device of Fig. 1 upon loading.
- Fig. 3: is a perspective view of the device of Fig. 1 from the back.
- Fig. 4: is a sectional side of the device of Fig. 1.
- Fig. 5: is a top view of detail of the device of Fig. 1 with a rack secured in a supply region.
- Fig. 6: is a top view of the detail of the device of Fig. 1 shown in Fig. 5 with a rack prior to a removal of the rack.
- Fig. 7: is top view of the device of Fig. 1 device for handling racks in a use position;
- Fig. 8: is top view of the device of Fig. 1 in an eject position;

### DETAILED DESCRIPTION OF THE DRAWINGS

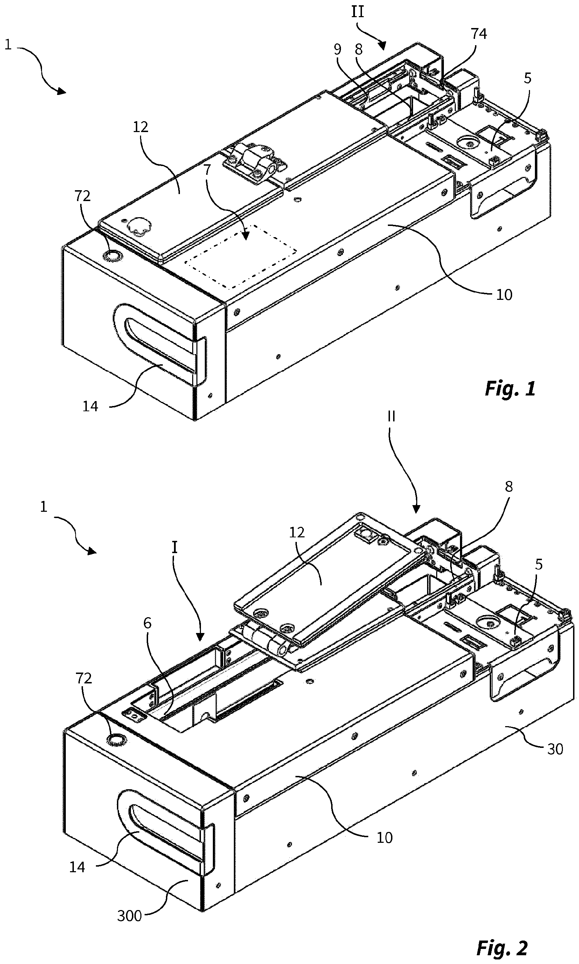

Fig. 1 to 8 show an embodiment of a device 1 for handling racks 2 of disposable pipette tips 20 in a laboratory automation system.

The device 1 is provided with a cover 10 having an openable window 12. The device 1 further comprises a grip recess 14, the purpose of which will be explained further below.

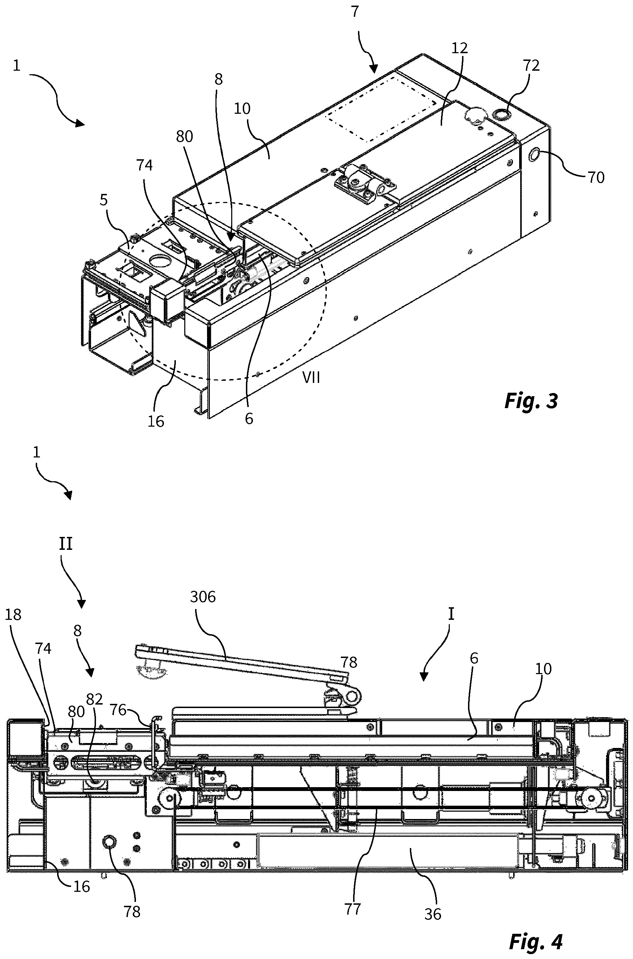

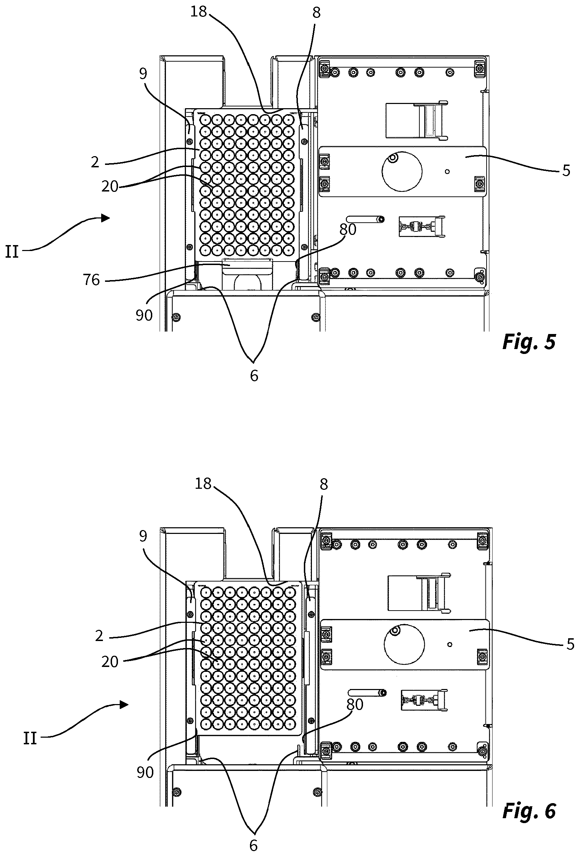

Figs. 1 and 2 are perspective views of the device 1, wherein in Fig. 1 the window 12 is closed and in Fig. 2 the window 12 is open for loading the device 1. Fig. 3 is a perspective view of the device 1 from behind. As can be seen in Figs. 1 and 3, the device 1 comprises two guide rails 6 for slideably receiving a plurality of racks 2 of disposable pipette tips 20 (see Fig. 5), wherein only one guide rail 6 is visible in each of Fig. 1 and 3. In the embodiment shown, a maximum of four racks 2 can be placed on the guide rails 6. The guide rails 6 shown are optimized for receiving racks 2 as known for example from EP 2 210 668 A2. However, other racks 2 can be placed on the guide rails 6 and/or the guide rails 6 can be designed for receiving other types of racks.

The guide rails 6 are arranged for guiding a rack 2 placed thereon from a loading region I to a supply region II.

For allowing access to the guide rails 6, the window 12 is opened as shown in Fig. 2. After the window 12 is opened, the loading region I is accessible by a user or a loading means for placing at least one rack 2 on the guide rails 6.

The racks 2 are provided with a plurality of disposable pipette tips 20 (as shown in Fig. 5), wherein the disposable pipette tips 20 stored in the rack 2 are accessible when the rack 2 is arranged at the supply region II by a delivering device, in particular a gripper, for delivering the plurality of disposable pipette tips 20 one by one to a pipetting system (not shown). Adjacent to the supply region II, a holder 5 for a microwell or microtiter plate is provided.

The device 1 comprises a rack moving mechanism 7 arranged underneath the cover 10. The rack moving mechanism 7 is provided with an element engaging with the racks 2 for successively moving the racks 2 from the loading region I into the supply region II.

In the embodiment shown, the racks 2 are loaded one at the time. After placing one rack 2 on the rails 6, the rack moving mechanism 7 can be activated by pressing a rack loader button 70 (see Fig. 3) for moving the rack 2 towards the supply region II. An optical element, in particular an LED light 72 indicates that the device 1 is ready for loading a subsequent rack 2. Preferably, opening the window 12 is hindered while the device 1 is not ready for loading.

A sensor 74 is provided for sensing the presence of a rack 2 in the supply region II.

The guide rails 6 do not reach into the supply region II. Rather, the guide rails 6 are extended by a pair of blocks 8, 9, wherein the supplying rack 2 rests on the blocks 8, 9 in the supply region II. At least one of the blocks 8, 9 is a moveable block 8, which is moveable between a support position and a release position. In case the moveable block 8 is in the support position, as shown in Fig. 3, the moveable block 8 is arranged in the extension of a guide rail 6, and the supplying rack 2 moved into the supply region II is placed on the moveable block 8. By means of a driving device 82 (see Fig. 4), the moveable block can be moved into the release position, wherein the distance of the moveable block 8 from the other block 9 is larger than the width of the rack 2, so that the rack 2 falls downwards due to gravity. In the embodiment shown, the moveable block 8 and the second block are provided with side surface 80, 90 acting against the supplying rack 2 when the moveable block 8 is in the support position, so that the supplying rack 2 is precisely positioned between the two blocks 8, 9, when the moveable block 8 is in the support position.

Fig. 4 is a sectional side view of the device of Fig. 1, wherein the window 12 is open. As shown in Fig. 4 the depicted rack moving mechanism 7 comprises a pusher 76 for pushing the racks 2 towards the supply region II. In Fig. 4, the pusher 76 is positioned in a working position, which working position is close to the supply region II and the device 1 is not ready for loading. The pusher 76 is moved into or towards the work position for forcing a supplying rack 2 against an abutment surface 18, which abutment surface 18 is provided perpendicular to the movement direction of the supplying rack 2 along the guide rails 6.

For loading the device 1, the pusher 76 has to be moved beyond the loading region I away from the supply region II into a home position. When the pusher 76 is in the home position, a rack 2 can be positioned between the supply region II and the pusher 76 and be moved by means of the pusher 76 into the supply region II. For moving the pusher 76, in the depicted embodiment a belt drive 77 is provided. The rack moving mechanism 7 further comprises a motor and hardware and/or software for a motor drive condition monitoring, for monitoring e.g. over current, drive slippage, belt slippage or belt derailment, motor blockage. The driving device 82 for moving the moveable block 8 between the support position and the release position is either integrated into the rack moving mechanism and/or in communication with the rack moving mechanism 7 for a coordination of a movement of all elements.

Underneath the supply region II, a chute 16 is provided. The device 1 allows for an automated removal of the racks 2 from the supply region II via the chute 16, wherein a successful removal is observed by means of a sensor 78, in particular an ultrasound sensor. After a successful removal, a successive rack within the device 1 is moved by means of the rack moving mechanism 7 into the supply region II. In case the device 1 is empty, an operator or user will be prompted to refill the device.

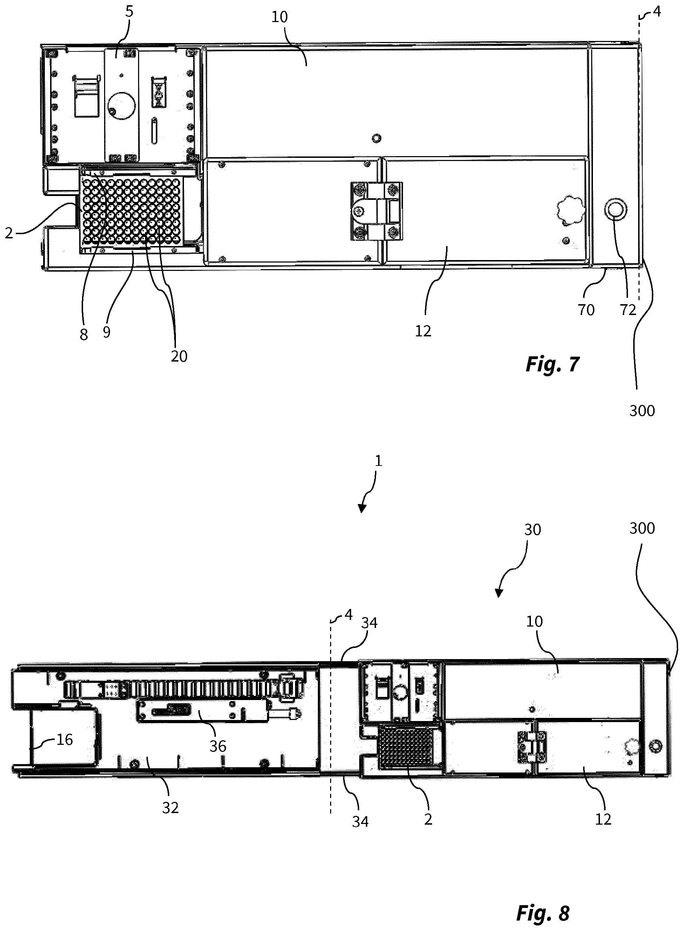

Further, an ejector device 36 is provided, the function of which is discussed further below with reference to Figs. 7 and 8.

Fig. 5 and 6 are top views of a detail of the device of Fig. 1 showing the supply region II with a rack 2 secured in the supply region II and with the rack 2 unsecured for a removal, respectively.

As can be seen in Figs. 5 and 6, the guide rails 6 are extended by two blocks 8, 9 on which the rack 2 rests in the supply region II. The block 8 adjacent to the holder 5 for the microwell plate is a moveable block 8. The second block 9 is mounted fixed in position. In other embodiments, both blocks are moveable. In still another embodiment, only one guide rail 6 is extend by means of a moveable block 8, whereas the other guide rail 6 reaches into the region of the supply region II. The blocks 8, 9 are provided with side walls 89, 90 contacting the rack 2, so that the rack 2 is securely positioned and held in the supply region II. At an end of the region of the supply region II opposite the guide rails 6, an abutment surface 18 is provided perpendicular to a movement direction of the rack 2 along the guide rails 6. As shown in Fig. 5, the rack 2 is forced against the abutment surface 18 and thereby secured in the supply region II by means of the pusher 76.

Once the rack 2 is ready for a removal, the moveable block 8 and the pusher 76 are moved away from the rack 2 to release the rack 2. In the embodiment shown, only the moveable block 8 adjacent to the holder 5 for the microwell plate is moved, allowing for a simplified drive mechanism for the moveable block 8. In preferred embodiments, a block driving device, in particular solenoid is provided for moving the block 8 back and forth, wherein an activation or deactivation of the solenoid is controlled by means of a control device of the rack moving mechanism 7.

In an embodiment (not shown), the guide rails and the racks are provided with a nut and groove connection for a reliable guidance of the racks along the guide rails 2. However, the blocks 8, 9 preferably support the racks without any form-locking transverse to the movement direction along the guide rails in order to allow for a relative movement of the moveable block in this direction for a removal of the racks.

In the embodiment shown, the device 1 is a drawer unit.

As shown in Fig. 7 and 8, the drawer unit comprises a drawer module 30 slideably supported on a base plate 32 by means of drawer rails 34, wherein the drawer module 3 is moveable with respect to the base plate 4 between a use position shown in Fig. 7 and an eject position shown in Fig. 8. The device 1 can be integrated into a laboratory automation system, wherein in the use position a front end 300 of the drawer module 30 is flush with or behind a front wall 4 (schematically shown by a broken line in Figs. 7 and 8) of a housing of the laboratory automation system and the interior of the device 1 is not accessible. The supply region II (see Figs.1 to 6) is located in the region of a rear end of the drawer module 30 opposite the front end 300.

The base plate 32 is fixed to the housing of the laboratory automation system or integrally formed with a wall of the housing. A grip recess 14 (see Fig. 3) for manually moving the drawer module 30 with respect to the base plate 32 is provided at the front end 300. In addition, an ejector device 36 is provided. In practice, the drawer module 30 is preferably locked in the use position shown in Fig. 7. In order to allow a transfer of the drawer module 30 into the eject position, the ejector device 36 is activated and the drawer module 30 is moved towards the eject position. Preferably, the ejector device 36 moves the drawer module 30 only over a small distance, wherein a further movement of the drawer module 30 into the eject position shown in Fig. 8 is carried out manually by user.

The chute 16 is provided at the base plate 32, wherein the chute 16 is arranged underneath the supply region when the drawer module 30 is moved to the use position.

When moving the drawer module 30 into the use position, the rack moving mechanism 7 forces the rack 2 or the racks 2 loaded towards the supply region II (see Fig. 5) to ensure that the first one of the racks 2 is in the correct position. For moving the drawer module 30 into the use position, the window 12 needs to be closed. In preferred embodiment, the rack moving mechanism 7 can only be activated if the window 12 is closed.

In the following, a preferred use of the device 1 is described.

The device 1 preferably is incorporated in a laboratory automation system, in particular in an automatic aliquoter used to transfer an aliquot of a sample to a microwell or microtiter plate.

On turning on the laboratory automation system including the device 1, the pusher 76 moves towards the supply region II for securing a rack 2 in the supply region II as shown in Fig. 5. In case there are no racks 2 loaded in the device 1, the pusher 76 travels in the opposite direction, towards its home position. The information that the device 1 is empty can be transmitted to a central control unit of the laboratory automation system. Preferably, the user is then prompted to load the device with fully stocked racks 2.

Next, the drawer module 30 is moved into the eject position shown in Fig. 8 providing the user with an ergonomically friendly access to the device 1 In preferred embodiments, the transfer is carried out semi-automatically when starting the device 1 in an empty state, after a removal of the last rack 2 and/or after the operator or user has pressed a respective button, wherein ejector device 36 pushes the drawer module over a small distance towards the eject position for releasing the drawer module 30 from a locked state, and wherein a subsequent movement into the eject position is carried out manually by an operator or user. In other embodiments, the transfer into the eject position is carried out fully automatically by means of the ejector device 36. In still another embodiment, the full movement is carried out manually.

When the drawer unit 30 is in the eject position and the pusher 76 is in the home position, the window 12 can be opened as shown in Fig. 2 and the racks 2 can be loaded. The racks 2 are loaded one at a time and are pushed into an appropriate position by closing the window 12 and then activating the pusher 76 by pressing the rack loader button 70. The pusher 76 pushes the rack or the plurality of racks loaded towards the supply region and travels back into the home position. After the pusher 76 has reached the home position, the LED light 72 indicates that the device 1 is ready for loading a subsequent rack 2.

After the desired number of racks 2 is loaded, the drawer module 30 is transferred to the use position. In the embodiment shown, a maximum of four racks 2 is loaded. When moving the drawer module 30 into the use position, the pusher 76 travels towards the supply region II moving the rack 2 or the plurality of racks 2 until a first one of the racks 2 reaches the supply region II and activates the sensor 74. The rack 2 is secured in the supply region II as shown in Fig. 5. This information can be sent to a central control unit of the laboratory automation system for informing the system that a rack 2 is located in the supply region II and that the device 1 is ready for the tip placement process.

The disposable pipette tips 20 are used one after the other and disposed after use until the rack 2 is empty. A removal of an empty rack 2 in preferred embodiments is triggered by the central control unit of the laboratory automation system, which detects that all pipette tips 20 have been used and sends a respective signal to a device control unit of the device 1.

The device 1 then releases the rack 2 by moving the pusher 76 and the at least one moveable block 8 away from the rack 2 as shown in Fig. 6. Preferably, at first the pusher 76 is activated to travel away from the supply region II towards its home position over a short distance, for example over a distance of approximately 10 to 30 mm. This may also cause a small movement of the rack 2 towards the home position of the pusher 76. Next, the moveable block 8 is driven to move a number of times to and fro between the positions shown in Fig. 5 and 6, for example three to six times, to cause the rack 2 to fall into the chute 16 and via the chute 16 into a waste container located underneath (not shown). The removal of the rack 2 via the chute 16 is detected by means of the sensor 78. After a successful removal of a rack 2 from the supply region II, the pusher 76 is driven to move a subsequent rack 2 into the supply region II.

This is repeated until the device 1 is empty and the user is prompted to refill the device 1.

## Claims

1. Device for handling racks (2) of disposable pipette tips (20) in a laboratory automation system, the device (1) comprising
- a loading region (I),
- a supply region (II), and
- at least one guide rail (6) for guiding racks (2) from the loading region (I) along a movement direction lying in a horizontal plane to the supply region (II),
wherein the loading region (I) is accessible by a user or a loading means for loading at least one rack (2) on the at least one guide rail (6), and
wherein the at least one guide rail is adapted to receive a plurality of racks,
wherein a rack moving mechanism (7) is provided for moving the racks (2) one by one towards and/or into the supply region (II),
wherein a plurality of disposable pipette tips (20) stored in a supplying rack (2) located in the supply region (II) is accessible by a delivering device for delivering at least one selected one of the plurality of disposable pipette tips (20) to a pipetting system,
wherein the device (1) is a drawer unit comprising a drawer module (3), which drawer module (3) is moveable between a use position and an eject position,
wherein at least one sensor is provided for detecting a removal of the supplying rack from the supply region, a presence of the supplying rack in the supply region (II), a state of the rack moving mechanism, a state of the drawer module and/or a state of an openable window provided at the cover of the device, **characterized**
**in that** the device (1) comprises at least one moveable block (8), which is controllably moveable by means of a driving device between a support position and a release position for selectively enabling or disabling a removal of the supplying rack (2) from the supply region (II), wherein in the support position the at least one moveable block (8) extends the at least one guide rail (6) in the longitudinal direction of the guide rail (8), at the supply region (II) the supplying rack (2) is placed on the at least one moveable block (8) arranged in the support position, and the at least one moveable block (8) is moved into the release position for a removal of the supplying rack (2) from the supply region (II) in a downward direction,
**in that** at the supply region (II) at least one abutment surface (18) is provided perpendicular to the movement direction of the supplying rack (2) along the at least one guide rail (6), wherein a pusher (76) is provided, and wherein the supplying rack (2) is forced against the abutment surface by means of the pusher (76),
**in that** the device (1) is provided with a cover (10) having an openable window (12), wherein for allowing access to the guide rails (6), the window (12) is opened, and wherein after the window (12) is opened, the loading region (I) is accessible by a user or a loading means for placing at least one rack (2) on the guide rails (6).

2. Device according to claim 1, **characterized in that** the driving device is adapted to effect a to-and-fro movement of the at least one moveable block (8).

3. Device according to claim 2, **characterized in that** the driving device comprises a solenoid,

4. Device according to claim 1, 2 or 3, **characterized in that** the moveable block (8) is provided with a side surface acting against the supplying rack (2) when the at least one moveable block (8) is in the support position.

5. Device according to any one of claims 1 to 4, **characterized in that** a chute (16) is provided underneath the supply region (II), wherein the device (1) is arranged for a removal of the supplying rack (2) via the chute (16).

6. Device according to any one of claims 1 to 5, **characterized in that** the pusher (76) is moveable to and fro between a home position and a working position for moving the racks (2) from the loading region (I) to the supply region (II) and for releasing the supplying rack (2).

7. Method for handling racks (2) of disposable pipette tips (20) in a device (1) for a laboratory automation system, the device (1) comprising a loading region (I), a supply region (II), at least one guide rail (6) for guiding racks (2) from the loading region (I) along a movement direction lying in a horizontal plane to the supply region (II), which at least one guide rail (6) is adapted to receive a plurality of racks, and at least one moveable block (8), which moveable block (8) is controllably moveable by means of a driving device between a support position and a release position for selectively enabling or disabling a removal of the supplying rack (2) from the supply region (II), wherein in the support position the at least one moveable block (8) extends the at least one guide rail (6) in the longitudinal direction of the guide rail (8), wherein the device (1) is a drawer unit comprising a drawer module (3), which drawer module (3) is moveable between a use position and an eject position, and wherein the device (1) is provided with a cover (10) having an openable window (12), the method comprising the steps of
- opening the window (12), so that the loading region (I) is accessible by a user or a loading means for placing at least one rack (2) on the at least one guide rails (6),
- placing a rack (2) at the loading region (1) on the at least one guide rail (6),
- moving the rack (2) along the at least one guide rail (6) into the supply region (II), wherein at the supply region (II) the supplying rack (2) is placed on the at least one moveable block (8) arranged in the support position, and wherein a plurality of disposable pipette tips (20) stored in the rack (2) located in the supply region (II) is accessible by a delivering device for delivering at least one selected one of the plurality of disposable pipette tips (20) to a pipetting system,
- securely positioning and holding the rack (2) in the supply region (II), while delivering at least one selected one of the plurality of disposable pipette tips (20) to a pipetting system, wherein at the supply region (II) the rack (2) is forced against at least one abutment surface, which abutment surface is arranged perpendicular to the movement direction of the rack (2) along the at least one guide rail (6), wherein the rack (2) is forced against the abutment surface by means of a pusher (76), and
- activating a driving device assigned to the at least one moveable block (8) for moving the at least one moveable block (8) into the release position for releasing the rack (2) and for a removal of the rack (2) from the supply region (II) in a downward direction.

8. Laboratory automation system with at least one of pre-analytical, analytical and/or post-analytical station provided with a pipetting system, the laboratory automation system comprising a device (2) according to any one of claims 1 to 6.

## Patentansprüche

1. Vorrichtung zum Handhaben von Gestellen (2) für Einwegpipettenspitzen (20) in einem Laborautomatisierungssystem, wobei die Vorrichtung (1) Folgendes umfasst
- eine Beladeregion (I),
- eine Versorgungsregion (II) und
- mindestens eine Führungsschiene (6) zum Führen der Gestelle (2) aus der Beladeregion (I) entlang einer Bewegungsrichtung, die in einer horizontalen Ebene liegt, zu der Versorgungsregion (II),
wobei ein Nutzer oder eine Beladeeinrichtung zum Laden mindestens eines Gestells (2) auf die mindestens eine Führungsschiene (6) auf die Beladeregion (I) zugreifen kann, und wobei die mindestens eine Führungsschiene zur Aufnahme einer Vielzahl von Gestellen ausgelegt ist,
wobei ein Gestellbewegungsmechanismus (7) zum Bewegen der Gestelle (2) nacheinander in Richtung der und/oder in die Versorgungsregion (II) vorgesehen ist, wobei eine Übergabevorrichtung zum Übergeben mindestens einer ausgewählten der Vielzahl von Einwegpipettenspitzen (20) an ein Pipettiersystem auf eine Vielzahl von Einwegpipettenspitzen (20), die in einem Versorgungsgestell (2) gelagert sind, das sich in der Versorgungsregion (II) befindet, zugreifen kann,
wobei die Vorrichtung (1) eine Schubladeneinheit ist, die ein Schubladenmodul (3) umfasst, wobei das Schubladenmodul (3) zwischen einer Nutzungsposition und einer Auswerfposition beweglich ist,
wobei mindestens ein Sensor zum Erfassen einer Entnahme des Versorgungsgestells aus der Versorgungsregion, einer Gegenwart des Versorgungsgestells in der Versorgungsregion (II), eines Status des Gestellbewegungsmechanismus, eines Status des Schubladenmoduls und/oder eines Status eines öffenbaren Fensters, das an der Abdeckung der Vorrichtung vorgesehen ist, vorgesehen ist, **dadurch gekennzeichnet, dass** die Vorrichtung (1) mindestens einen beweglichen Block (8) umfasst, der mittels einer Antriebsvorrichtung steuerbar zwischen einer Halteposition und einer Freigabeposition beweglich ist, um selektiv eine Entnahme des Versorgungsgestells (2) aus der Versorgungsregion (II) zu ermöglichen oder zu unterbinden, wobei in der Halteposition der mindestens eine bewegliche Block (8) die mindestens eine Führungsschiene (6) in der Längsrichtung der Führungsschiene (8) verlängert, an der Versorgungsregion (II) das Versorgungsgestell (2) auf dem mindestens einen beweglichen Block (8), der in der Halteposition angeordnet ist, platziert ist, und der mindestens eine bewegliche Block (8) für eine Entnahme des Versorgungsgestells (2) aus der Versorgungsregion (II) nach unten in die Freigabeposition bewegt wird,
dass an der Versorgungsregion (II) mindestens eine Auflagefläche (18) senkrecht zur Bewegungsrichtung des Versorgungsgestells (2) entlang der mindestens einen Führungsschiene (6) vorgesehen ist, wobei ein Schieber (76) vorgesehen ist und wobei das Versorgungsgestell (2) mittels des Schiebers (76) gegen die Auflagefläche gedrängt wird,
dass die Vorrichtung (1) mit einer Abdeckung (10) mit einem öffenbaren Fenster (12) versehen ist, wobei das Fenster (12) für einen möglichen Zugriff auf die Führungsschienen (6) geöffnet ist und wobei nach dem Öffnen des Fensters (12) ein Nutzer oder eine Beladeeinrichtung zum Platzieren mindestens eines Gestells (2) auf den Führungsschienen (6) Zugriff auf die Beladeregion (I) hat.

2. Vorrichtung nach Anspruch 1, **dadurch gekennzeichnet, dass** die Antriebsvorrichtung dafür ausgelegt ist, eine Hin- und Herbewegung des mindestens einen beweglichen Blocks (8) zu bewirken.

3. Vorrichtung nach Anspruch 2, **dadurch gekennzeichnet, dass** die Antriebsvorrichtung ein Solenoid umfasst.

4. Vorrichtung nach Anspruch 1, 2 oder 3, **dadurch gekennzeichnet, dass** der bewegliche Block (8) mit einer Seitenfläche versehen ist, die gegen das Versorgungsgestell (2) wirkt, wenn sich der mindestens eine bewegliche Block (8) in der Halteposition befindet.

5. Vorrichtung nach einem der Ansprüche 1 bis 4, **dadurch gekennzeichnet, dass** ein Schacht (16) unter der Versorgungsregion (II) vorgesehen ist, wobei die Vorrichtung (1) für eine Entnahme des Versorgungsgestells (2) über den Schacht (16) angeordnet ist.

6. Vorrichtung nach einem der Ansprüche 1 bis 5, **dadurch gekennzeichnet, dass** der Schieber (76) zwischen einer Ruheposition und einer Arbeitsposition zum Bewegen der Gestelle (2) aus der Beladeregion (I) in die Versorgungsregion (II) und zum Freigeben des Versorgungsgestells (2) hin und her bewegt werden kann.

7. Verfahren zum Handhaben von Gestellen (2) für Einwegpipettenspitzen (20) in einer Vorrichtung (1) für ein Laborautomatisierungssystem, wobei die Vorrichtung (1) eine Beladeregion (I), eine Versorgungsregion (II), mindestens eine Führungsschiene (6) zum Führen von Gestellen (2) aus der Beladeregion (I) entlang einer Bewegungsrichtung, die in einer horizontalen Ebene liegt, zu der Versorgungsregion (II), wobei die mindestens eine Führungsschiene (6) zur Aufnahme einer Vielzahl von Gestellen ausgelegt ist, und mindestens einen beweglichen Block (8) umfasst, wobei der bewegliche Block (8) mittels einer Antriebsvorrichtung steuerbar zwischen einer Halteposition und einer Freigabeposition beweglich ist, um selektiv eine Entnahme des Versorgungsgestells (2) aus der Versorgungsregion (II) zu ermöglichen oder zu unterbinden, wobei in der Halteposition der mindestens eine bewegliche Block (8) die mindestens eine Führungsschiene (6) in der Längsrichtung der Führungsschiene (8) verlängert, wobei die Vorrichtung (1) eine Schubladeneinheit ist, die ein Schubladenmodul (3) umfasst, wobei das Schubladenmodul (3) zwischen einer Nutzungsposition und einer Auswerfposition beweglich ist und wobei die Vorrichtung (1) mit einer Abdeckung (10) mit einem öffenbaren Fenster (12) versehen ist, wobei das Verfahren die folgenden Schritte umfasst
- Öffnen des Fensters (12), sodass ein Nutzer oder eine Beladeeinrichtung zum Platzieren mindestens eines Gestells (2) auf der mindestens einen Führungsschiene (6) auf die Beladeregion (I) zugreifen kann,
- Platzieren eines Gestells (2) an der Beladeregion (1) auf der mindestens einen Führungsschiene (6),
- Bewegen des Gestells (2) entlang der mindestens einen Führungsschiene (6) in die Versorgungsregion (II), wobei an der Versorgungsregion (II) das Versorgungsgestell (2) auf dem mindestens einen beweglichen Block (8), der in der Halteposition angeordnet ist, platziert wird, und wobei eine Übergabevorrichtung zum Übergeben mindestens einer ausgewählten der Vielzahl von Einwegpipettenspitzen (20) an ein Pipettiersystem auf eine Vielzahl von Einwegpipettenspitzen (20), die in dem Gestell (2) gelagert sind, das sich in der Versorgungsregion (II) befindet, zugreifen kann,
- sicheres Positionieren und Halten des Gestells (2) in der Versorgungsregion (II), während mindestens eine ausgewählte der Vielzahl von Einwegpipettenspitzen (20) an ein Pipettiersystem übergegeben wird, wobei an der Versorgungsregion (II) das Gestell (2) gegen mindestens eine Auflagefläche gedrängt wird, wobei die Auflagefläche senkrecht zu der Bewegungsrichtung des Gestells (2) entlang der mindestens einen Führungsschiene (6) angeordnet ist, wobei das Gestell (2) mittels eines Schiebers (76) gegen die Auflagefläche gedrängt wird, und
- Aktivieren einer Antriebsvorrichtung, die dem mindestens einen beweglichen Block (8) zugeordnet ist, um den mindestens einen beweglichen Block (8) in die Freigabeposition zu bewegen, um das Gestell (2) freizugeben und das Gestell (2) nach unten aus der Versorgungsregion (II) zu entnehmen.

8. Laborautomatisierungssystem mit mindestens einer von einer Voranalyse-, Analyse- und/oder Nachanalysestation, die mit einem Pipettiersystem versehen ist, wobei das Laborautomatisierungssystem eine Vorrichtung (2) nach einem der Ansprüche 1 bis 6 umfasst.

## Revendications

1. Dispositif permettant de manipuler des râteliers (2) de pointes de pipette jetables (20) dans un système d'automatisation de laboratoire, le dispositif (1) comprenant
- une région de chargement (I),
- une région d'alimentation (II), et
- au moins un rail de guidage (6) permettant de guider les râteliers (2) de la région de chargement (I) le long d'une direction de mouvement située dans un plan horizontal jusqu'à la région d'alimentation (II),
dans lequel la région de chargement (I) est accessible par un utilisateur ou un moyen de chargement pour charger au moins un râtelier (2) sur l'au moins un rail de guidage (6), et dans lequel l'au moins un rail de guidage est conçu pour recevoir une pluralité de râteliers, dans lequel un mécanisme de déplacement de râteliers (7) est fourni pour déplacer les râteliers (2) un par un vers et/ou dans la région d'alimentation (II),
dans lequel une pluralité de pointes de pipette jetables (20) stockées dans un râtelier d'alimentation (2) situé dans la région d'alimentation (II) est accessible par un dispositif de distribution permettant de distribuer au moins une sélectionnée une de la pluralité de pointes de pipette jetables (20) à un système de pipetage,
dans lequel le dispositif (1) est une unité de tiroir comprenant un module de tiroir (3), lequel module de tiroir (3) est mobile entre une position d'utilisation et une position d'éjection,
dans lequel au moins un capteur est fourni pour détecter un retrait du râtelier d'alimentation de la région d'alimentation, une présence du râtelier d'alimentation dans la région d'alimentation (II), un état du mécanisme de déplacement de râtelier, un état du module de tiroir et/ou un état d'une fenêtre pouvant être ouverte fournie au niveau du couvercle du dispositif, **caractérisé**
**en ce que** le dispositif (1) comprend au moins un bloc mobile (8), qui est mobile de manière contrôlée au moyen d'un dispositif d'entraînement entre une position de support et une position de libération pour sélectivement activer ou désactiver un retrait du râtelier d'alimentation (2) de la région d'alimentation (II), dans lequel dans la position de support l'au moins un bloc mobile (8) prolonge l'au moins un rail de guidage (6) dans la direction longitudinale du rail de guidage (8), au niveau de la région d'alimentation (II) le râtelier d'alimentation (2) est placé sur l'au moins un bloc mobile (8) agencé dans la position de support, et l'au moins un bloc mobile (8) est déplacé dans la position de libération pour un retrait du râtelier d'alimentation (2) de la région d'alimentation (II) dans une direction vers le bas,
**en ce qu'**au niveau de la région d'alimentation (II) au moins une surface de butée (18) est fournie perpendiculaire à la direction de mouvement du râtelier d'alimentation (2) le long de l'au moins un rail de guidage (6), dans lequel un poussoir (76) est fourni, et dans lequel le râtelier d'alimentation (2) est poussé contre la surface de butée au moyen du poussoir (76),
**en ce que** le dispositif (1) est pourvu d'un couvercle (10) ayant une fenêtre pouvant être ouverte (12), dans lequel pour permettre l'accès aux rails de guidage (6), la fenêtre (12) est ouverte, et dans lequel après l'ouverture de la fenêtre (12), la région de chargement (I) est accessible par un utilisateur ou un moyen de chargement pour placer au moins un râtelier (2) sur les rails de guidage (6).

2. Dispositif selon la revendication 1, **caractérisé en ce que** le dispositif d'entraînement est conçu pour effectuer un mouvement de va-et-vient de l'au moins un bloc mobile (8).

3. Dispositif selon la revendication 2, **caractérisé en ce que** le dispositif d'entraînement comprend un solénoïde.

4. Dispositif selon la revendication 1, 2 ou 3, **caractérisé en ce que** le bloc mobile (8) est pourvu d'une surface latérale agissant contre le râtelier d'alimentation (2) lorsque l'au moins un bloc mobile (8) est dans la position de support.

5. Dispositif selon l'une quelconque des revendications 1 à 4, **caractérisé en ce qu'**une goulotte (16) est fournie sous la région d'alimentation (II), dans lequel le dispositif (1) est agencé pour un retrait du râtelier d'alimentation (2) par le biais de la goulotte (16).

6. Dispositif selon l'une quelconque des revendications 1 à 5, **caractérisé en ce que** le poussoir (76) est mobile en va-et-vient entre une position de repos et une position de travail pour déplacer les râteliers (2) de la région de chargement (I) jusqu'à la région d'alimentation (II) et pour libérer le râtelier d'alimentation (2).

7. Procédé permettant de manipuler des râteliers (2) de pointes de pipette jetables (20) dans un dispositif (1) pour un système d'automatisation de laboratoire, le dispositif (1) comprenant une région de chargement (I), une région d'alimentation (II), au moins un rail de guidage (6) permettant de guider les râteliers (2) de la région de chargement (I) le long d'une direction de mouvement située dans un plan horizontal jusqu'à la région d'alimentation (II), lequel au moins un rail de guidage (6) est conçu pour recevoir une pluralité de râteliers, et au moins un bloc mobile (8), lequel bloc mobile (8) est mobile de manière contrôlée au moyen d'un dispositif d'entraînement entre une position de support et une position de libération pour sélectivement activer ou désactiver un retrait du râtelier d'alimentation (2) de la région d'alimentation (II), dans lequel dans la position de support l'au moins un bloc mobile (8) prolonge l'au moins un rail de guidage (6) dans la direction longitudinale du rail de guidage (8), dans lequel le dispositif (1) est une unité de tiroir comprenant un module de tiroir (3), lequel module de tiroir (3) est mobile entre une position d'utilisation et une position d'éjection, et dans lequel le dispositif (1) est pourvu d'un couvercle (10) ayant une fenêtre pouvant être ouverte (12), le procédé comprenant les étapes de
- ouverture de la fenêtre (12), de sorte que la région de chargement (I) est accessible par un utilisateur ou un moyen de chargement pour placer au moins un râtelier (2) sur l'au moins un rail de guidage (6),
- mise en place d'un râtelier (2) au niveau de la région de chargement (I) sur l'au moins un rail de guidage (6),
- déplacement du râtelier (2) le long de l'au moins un rail de guidage (6) dans la région d'alimentation (II), dans lequel au niveau de la région d'alimentation (II) le râtelier d'alimentation (2) est placé sur l'au moins un bloc mobile (8) agencé dans la position de support, et dans lequel une pluralité de pointes de pipette jetables (20) stockées dans le râtelier (2) situé dans la région d'alimentation (II) est accessible par un dispositif de distribution permettant de distribuer au moins une sélectionnée une de la pluralité de pointes de pipette jetables (20) à un système de pipetage,
- positionnement et maintien de manière fixe du râtelier (2) dans la région d'alimentation (II), tout en distribuant au moins une sélectionnée une de la pluralité de pointes de pipette jetables (20) à un système de pipetage, dans lequel au niveau de la région d'alimentation (II) le râtelier (2) est poussé contre au moins une surface de butée, laquelle surface de butée est agencée perpendiculaire à la direction de mouvement du râtelier (2) le long de l'au moins un rail de guidage (6), dans lequel le râtelier (2) est poussé contre la surface de butée au moyen d'un poussoir (76), et
- activation d'un dispositif d'entraînement attribué à l'au moins un bloc mobile (8) pour déplacer l'au moins un bloc mobile (8) dans la position de libération pour libérer le râtelier (2) et pour un retrait du râtelier (2) de la région d'alimentation (II) dans une direction vers le bas.

8. Système d'automatisation de laboratoire avec au moins une parmi une station préanalytique, analytique et/ou post-analytique pourvue d'un système de pipetage, le système d'automatisation de laboratoire comprenant un dispositif (2) selon l'une quelconque des revendications 1 à 6.
